(19) **Europäisches Patentamt / European Patent Office / Office européen des brevets**

(11) **EP 3 274 702 B1**

(12) **FASCICULE DE BREVET EUROPEEN**

(45) Date de publication et mention de la délivrance du brevet:
**15.09.2021 Bulletin 2021/37**

(21) Numéro de dépôt: **16718413.4**

(22) Date de dépôt: **24.03.2016**

(51) Int Cl.:
*G01N 29/07* [(2006.01)]  *G01N 29/34* [(2006.01)]
*G01N 29/44* [(2006.01)]

(86) Numéro de dépôt international:
**PCT/FR2016/050671**

(87) Numéro de publication internationale:
**WO 2016/151260 (29.09.2016 Gazette 2016/39)**

(54) **PROCEDE DE DETECTION D'UN DEFAUT DANS UN FIL METALLIQUE D'UN ENSEMBLE DE FILS METALLIQUES, EN PARTICULIER POUR UNE ZONE D'ANCRAGE D'UNE STRUCTURE D'INGENIERIE CIVILE**

VERFAHREN ZUR FEHLERDETEKTION IN EINEM METALLDRAHT EINES DRAHTSEILS, INSBESONDERE FÜR DEN VERANKERUNGSBEREICH EINER BAUTECHNISCHEN STRUKTUR

METHOD OF FLAW DETECTION IN A METAL WIRE BEING PART OF A METAL WIRE ASSEMBLY, IN PARTICULAR FOR AN ANCHORAGE ZONE OF A CIVIL ENGINEERING STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2015 FR 1552504**

(43) Date de publication de la demande:
**31.01.2018 Bulletin 2018/05**

(73) Titulaires:
- **Soletanche Freyssinet**
  **92500 Rueil Malmaison (FR)**
- **Université Gustave Eiffel**
  **77454 Champs-sur-Marne (FR)**

(72) Inventeurs:
- **LAGUERRE, Laurent**
  **44000 Nantes (FR)**
- **DURAND, Olivier**
  **44000 Nantes (FR)**
- **COLIN, Rémi**
  **78390 Bois D'Arcy (FR)**

(74) Mandataire: **Plasseraud IP**
  **66, rue de la Chaussée d'Antin**
  **75440 Paris Cedex 09 (FR)**

(56) Documents cités:
**US-A1- 2003 037 615    US-B1- 7 575 371**

- **YANG FENG ET AL: "Defect detection by ultrasonic guided wave for a steel wire in the anchorage zones", PROCEEDINGS OF THE 2014 SYMPOSIUM ON PIEZOELECTRICITY, ACOUSTIC WAVES, AND DEVICE APPLICATIONS, IEEE, 30 octobre 2014 (2014-10-30), pages 206-209, XP032714197, DOI: 10.1109/SPAWDA.2014.6998562**
- **LIU Z ET AL: "Propagation characteristics of high order longitudinal modes in steel strands and their applications", ACTA MECHANICA SOLIDA SINICA, ELSEVIER, AMSTERDAM, NL, vol. 21, no. 6, 1 décembre 2008 (2008-12-01), pages 573-579, XP026094185, ISSN: 0894-9166 [extrait le 2008-12-01]**

## Description

L'invention a pour objet un procédé de détection d'un défaut d'au moins un fil métallique d'un ensemble de fils métalliques, en particulier dans un câble.

L'invention s'applique en particulier à un câble dans le domaine de l'inspection d'une structure d'ingénierie civile.

Un tel câble comprend un ou plusieurs ensembles de fils métalliques solidaires les uns des autres et destiné à rigidifier une structure d'ingénierie civile, telle qu'un pont.

Plus précisément, dans une structure d'ingénierie civile, il existe des zones, dites zones d'ancrage, dans lesquelles des extrémités de plusieurs câbles viennent s'arrimer à un tablier et à un pylône pour un pont à haubans ou permettent de pré-contraindre le béton de l'ouvrage pour un pont en béton précontraint.

Ces zones d'ancrage sont généralement constituées de pièces métalliques massives et/ou de parties en béton fortement ferraillées entourant le câble, rendant toute auscultation depuis l'extérieur très délicate ; le câble étant souvent disposé dans une gaine métallique injectée elle-même par du coulis de ciment, de la graisse, ou de la cire ou tout autre matériau de protection.

Au niveau du fonctionnement de l'ouvrage, les zones d'ancrages sont des zones critiques à surveiller pour lesquelles les concentrations de contrainte sont fortes, avec risque de dégradation des aciers par corrosion sous contrainte suite à des infiltrations d'eau au niveau des points bas de l'ouvrage ou par manque de coulis d'injection au point haut. Ces dégradations se traduisent généralement par la présence de fils rompus.

Il est donc primordial de pouvoir détecter les défauts des fils métalliques dans des câbles de telles structures.

Néanmoins, l'auscultation visuelle est rendue impossible puisque de tels câbles ne sont pas visibles directement du fait des dispositions constructives et de protection. Il est d'usage de pratiquer des ouvertures dans des matériaux dans lequel le ou les câbles sont noyés pour pouvoir contrôler visuellement l'état des câbles au seul niveau de l'ouverture. Cette dernière approche reste par ailleurs limitée car elle est d'une part destructive et d'autre part locale.

De plus, dans le cas d'une zone d'ancrage, les contraintes sont importantes, et les dispositions constructives permettant une bonne transmission des efforts n'autorisent pas un dégagement de l'espace et un accès nécessaires à une inspection visuelle.

Il est également connu de recourir à une méthode par flux de fuite magnétique (dite de Sheel et Hillemeier), qui se révèle délicate à mettre en œuvre puisqu'il est difficile de s'affranchir de l'influence des aciers de la gaine quand elle est métallique, ou des effets d'écran survenant entre les fils et/ou entre les ensembles de fils, ce qui perturbe les lignes de flux magnétique et compromet l'interprétation des résultats. Cette technique est de plus inopérante dans les zones d'ancrage des câbles du fait d'une présence supplémentaire de forte densité de ferraillage dans le béton ou de pièces massives en acier.

Le but de l'invention est de remédier au moins partiellement à ces inconvénients.

US 7 575 371 B1 divulgue l'emploi des ondes acoustiques basse-fréquence (produit fréquence-rayon inférieur à 1 MHz.mm) dans des câbles électriques pour évaluer de manière non-destructive l'état du câble à travers une mesure de sa température ou de son élongation.

US 2003/037615 A1 divulgue l'emploi des ondes acoustiques basse-fréquence (produit fréquence-rayon compris entre 0.07 MHz.mm et 2.1 MHz.mm) dans des câbles électriques pour évaluer de manière non-destructive la qualité de la gaine isolante entourant un fil.

La publication « Defect detection by ultrasonic guided wave for a steel wire in the anchorage zones » (F. Yang, Y. Pan and W. Chen, Proceedings of the 2014 Symposium on Piezoelectricity, Acoustic Waves, and Device Applications, Beijing, 2014, pp. 206-209) décrit la propagation des ondes ultrasonores dans un fil d'acier pour déterminer s'il est possible de détecter et de localiser les défauts par la méthode des éléments finis. L'étude est réalisée dans un domaine basse-fréquence (produit fréquence-rayon égal à 0.7 MHz.mm).

La publication « Propagation characteristics of high order longitudinal modes in steel strands and their applications » (Liu Z. et al., Acta Mechanica Solida Sinica, Elsevier, Amsterdam, vol. 21, no. 6, pp. 573-579) analyse les caractéristiques de propagation des ondes guidées par ultrasons dans des torons d'acier pour pouvoir détecter des défauts dans ces torons dans un domaine de fréquence intermédiaire (produit fréquence-rayon inférieur ou égal à 7.5 MHz.mm).

L'invention est définie dans les revendications annexées. Dans la présente description et les dessins, tous les exemples et les descriptions techniques de dispositifs, de produits et/ou de procédés qui ne sont pas couverts par les revendications doivent être considérés comme de l'art antérieur ou des exemples utiles pour comprendre l'invention.

L'invention a pour objet un procédé de détection de défaut d'au moins un fil d'un ensemble de fils métallique, en particulier dans un câble, le procédé comprenant une :

- étape d'émission d'un signal ultra sonore haute-fréquence centré autour d'une fréquence dite spécifique dans le fil métallique ;

- étape de réflexion dudit signal ultra sonore dans le fil métallique ; et

- étape de réception du signal ultra sonore réfléchi ;

le signal ultra sonore émis permettant une excitation d'au moins une onde haute-fréquence apte à se propager dans une direction longitudinale du fil métallique et présentant une vitesse de phase légèrement supérieure à une vitesse ($c_p$) d'une onde de volume de compression dans le métal à partir duquel est composé le fil métallique.

Ainsi, grâce au procédé selon la présente invention, il est possible d'ausculter de façon non destructive et in situ chacun des fils métalliques d'un câble, puisqu'il suffit que les ondes ultra sonores se propagent dans le fil dont on analyse l'état.

De plus, le signal ultra sonore émis est optimisé pour que l'onde soit concentrée dans le fil à analyser et pour qu'elle se propage sur de longues distances, de l'ordre de quelques mètres, ce qui permet une évaluation de chaque fil et donc la détection des défauts même éloignés des extrémités accessibles.

Le procédé selon l'invention s'applique donc tout particulièrement aux zones d'ancrage.

Selon une autre caractéristique de l'invention, la fréquence spécifique adimensionnelle est définie par l'équation :

$$\frac{2\pi f_0 a}{c_P} = z\acute{e}ros\{J_0(x)\}\sqrt{1-2\vartheta} \,,$$

où $a$ est un rayon du fil métallique, $J_0$ est la fonction de Bessel d'ordre 0, $z\acute{e}ros\{J_0(x)\}$ sont les valeurs qui annulent la fonction de Bessel d'ordre 0 et $\vartheta$ est le coefficient de Poisson et $c_p$ est la vitesse de l'onde de volume de compression du métal à partir duquel est composé le fil.

Selon une autre caractéristique de l'invention, le produit fréquence spécifique rayon, exprimé en MHz.mm, est compris entre 10 et 20, et de préférence entre 11 et 17.5.

Selon une autre caractéristique de l'invention, une largeur de bande $\Delta f$ du signal ultrasonore émis (Se) est d'un ordre de grandeur $\frac{c_P}{30a}\sqrt{1-2\vartheta}$ , où le paramètre a est une valeur d'un plus grand rayon de l'ensemble de fils.

Selon une autre caractéristique de l'invention, l'étape d'émission comprend une étape de balayage en fréquence autour de la fréquence spécifique.

Selon une autre caractéristique de l'invention, l'étape de balayage est réalisée par pas compris entre $\frac{c_P}{120a}\sqrt{1-2\vartheta}$ et $\frac{c_P}{60a}\sqrt{1-2\vartheta}$ , où le paramètre a est une valeur d'un plus grand rayon de l'ensemble de fils.

Selon une autre caractéristique de l'invention, le signal ultra sonore émis est une excitation sinusoïdale d'une durée de plusieurs périodes et de préférence modulée en amplitude.

Selon une autre caractéristique de l'invention, le procédé comprend une étape de positionnement d'un système d'émission et de réception du signal ultra sonore à une même extrémité du fil métallique à évaluer.

Selon une autre caractéristique de l'invention, l'extrémité du fil métallique est disposée perpendiculairement à une direction longitudinale z=L des fils afin qu'un angle entre les dispositifs d'émission et de réception et chacun des fils hélicoïdaux n'excède pas 5°.

Selon une autre caractéristique de l'invention, le procédé comprend une étape de mesure d'une durée entre l'émission du signal ultra sonore et la détection du signal ultra sonore réfléchi.

Selon une autre caractéristique de l'invention, le procédé comprend une étape de comparaison de ladite durée à une valeur attendue d'un temps de parcours du signal ultra sonore réfléchi dans le fil métallique.

Selon une autre caractéristique de l'invention, le procédé comprend une étape de localisation d'un défaut par une estimation de la vitesse de propagation de l'énergie de l'onde globale dans le fil métallique.

Selon une autre caractéristique de l'invention, la vitesse de propagation d'énergie de l'onde globale dans le fil est estimée au moyen de l'équation :

$$V_e = c_p \left[1 - exp(-1{,}53\vartheta(2\pi a f_0/c_P)^{0,6})\right]/\sqrt{1+\tan^2(\theta)} \,,$$

où $\theta$ est un angle d'hélice du fil métallique.

D'autres caractéristiques et avantages de l'invention apparaîtront encore à la lecture de la description qui va suivre. Celle-ci est purement illustrative et doit être lue en regard des dessins annexés sur lesquels :

- la figure 1a illustre un toron comprenant sept fils à ausculter ;

- la figure 1b illustre un câble comprenant une pluralité de torons de précontrainte ;

- la figure 1c illustre le câble de la figure 1b dans une zone d'ancrage d'une structure d'ingénierie civile ;

- la figure 2 illustre un procédé de détection d'un défaut selon la présente invention sous forme d'un diagramme de blocs ;

- la figure 3 est un graphe de comparaison entre des fréquences spécifiques adimensionnelles exactes (en abscisse) pour un cylindre nu plongé dans le vide et des fréquences spécifiques adimensionnelles approchées (en ordonnée) pour quatre coefficients de Poisson : $\vartheta = 0{,}27$ ; $\vartheta = 0{,}28$ ; $\vartheta = 0{,}29$ ; et $\vartheta = 0{,}30$ ;

- la figure 4 est un graphe de comparaison entre des fréquences spécifiques adimensionnelles exactes pour un cylindre nu plongé dans le vide (en abscisse) et pour un cylindre noyé dans un matériau solide (en ordonnée) ;

- la figure 5 illustre un spectre en amplitude d'une excitation temporelle sinusoïdale de fréquence centrale $f_0$ et de largeur de bande $\Delta f$ ;

- la figure 6 illustre un signal d'excitation temporel composé d'une sinusoïde de 90 cycles de fréquence centrale 4.9 MHz modulée en amplitude par une courbe gaussienne ;

- la figure 7 illustre un principe de balayage en fréquence d'un spectre de fréquences centrales $f_i$ et de largeur de bande $\Delta f$ constante ;

- la figure 8 illustre un enregistrement temporel du procédé selon la présente invention sur un fil central du toron de la figure 1 ; le toron étant noyé dans du coulis de ciment ; et

- la figure 9 illustre un enregistrement temporel du procédé selon la présente invention sur un fil périphérique hélicoïdal du toron de la figure 1, le toron étant noyé dans du coulis de ciment et présentant un défaut dans le fil périphérique hélicoïdal.

Câble

Le procédé de détection selon la présente invention va être détaillé dans une application à un câble de précontrainte composé de torons multifils.

Bien entendu, l'invention ne se limite pas à ce type de câbles et s'applique à tout câble comprenant un ou plusieurs ensembles de fils métalliques.

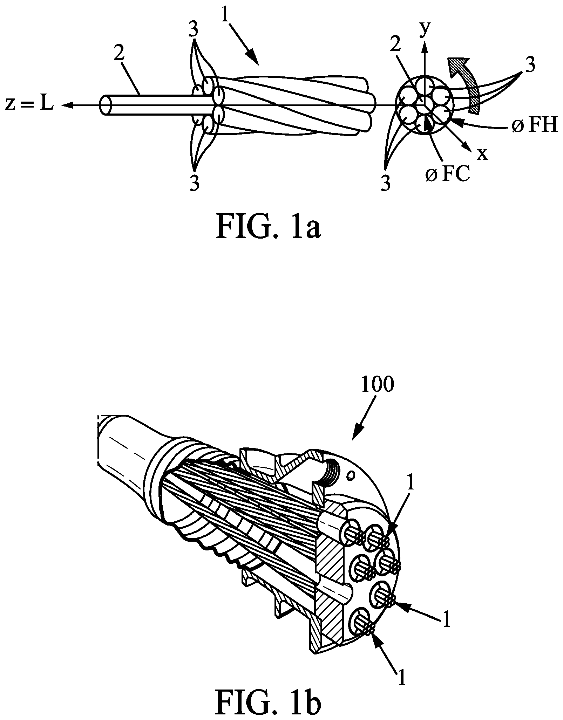

Comme visible à la figure 1a, un toron 1 comprend un ensemble de fils solidaires les uns des autres.

Par toron, on entend un ensemble de fils tournés ensemble.

Bien entendu, l'invention ne se limite pas à un toron et s'applique à tout ensemble de plusieurs fils métalliques solidaires les uns des autres ou groupés en faisceau, quelle que soit leur configuration relative.

Le toron 1 illustré est de type hélicoïdal comprenant un fil central 2 et six fils périphériques 3 répartis autour du fil central 2.

Le fil central 2 présente une forme générale de cylindre circulaire droit de rayon noté $a_{FC}$.

Chaque fil périphérique 3 présente une forme générale hélicoïdale, par exemple comportant un angle d'hélice de $\theta = 7{,}9°$, dont une section transversale définit un rayon noté $a_{FH}$.

Les fils 2 et 3 sont métalliques, de préférence en acier.

Le rayon $a_{FC}$ du fil central 2 est avantageusement légèrement supérieur au rayon $a_{FH}$ de chaque fil périphérique 3.

Ainsi, une fréquence d'excitation du fil central 2 est différente d'une fréquence d'excitation des fils hélicoïdaux du fait de leurs diamètres différents, comme il va être expliqué ci-après.

Le toron 1 est enrobé d'un coulis de ciment, de graisse ou de cire.

Le toron s'étend dans une direction longitudinale z=L qui coïncide avec un axe longitudinal du fil central 2.

Comme visible à la figure 1b, le câble 100 comprend une pluralité de torons 1 enrobés dans un coulis de ciment, de graisse ou de cire, les torons s'étendant sensiblement parallèlement les uns aux autres.

En d'autres termes, le câble 100 comprend dans le cas illustré une pluralité d'ensembles de fils, chaque ensemble de fils étant un toron.

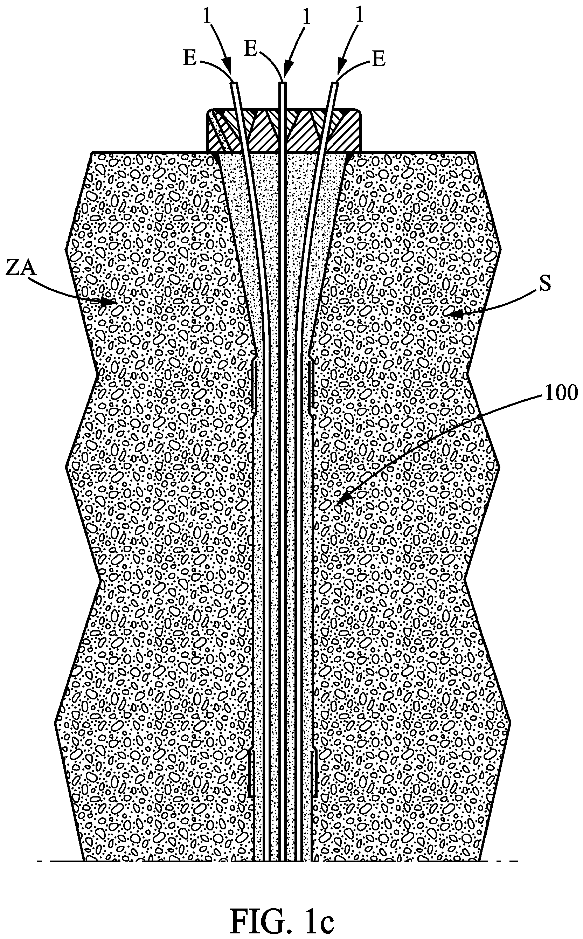

Comme visible sur la figure 1c, l'invention s'applique avantageusement dans le cas où le câble 100 fait partie d'une structure d'ingénierie civile S, telle qu'un pont en béton précontraint dans laquelle le ou les ensembles de fils ne sont pas accessibles car noyés dans un coulis de ciment, de graisse ou de cire, pour pré-contraindre ou supporter la structure, comme déjà expliqué, et dans laquelle le câble 100 est disposé dans une zone d'ancrage ZA.

L'invention s'applique également avantageusement à une structure de pont à haubans, non représentée.

Procédé de détection

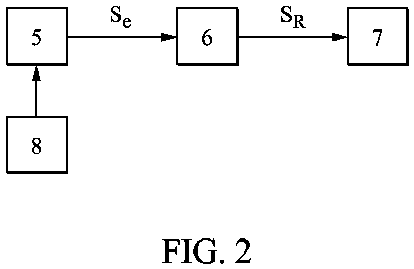

Comme illustré à la figure 2, le procédé 4 selon l'invention de détection de l'état de l'un des fils métalliques 2, 3 dans le toron précontraint 1, comprend :

- une étape 5 d'émission d'un signal ultra sonore Se centré autour d'une fréquence $f_0$ dans le fil métallique, dite fréquence spécifique ;

- une étape 6 de réflexion du signal ultra sonore Se dans le fil métallique 2, 3 ; et

- une étape 7 de réception du signal ultra sonore Sr réfléchi.

Le signal ultra sonore émis Se génère une onde haute-fréquence apte à se propager dans une direction longitudinale z=L et présentant une vitesse de phase $V_\varphi$ légèrement supérieure à la vitesse de l'onde de volume de compression $c_P$ dans le métal à partir duquel est composé le fil métallique.

De préférence, l'onde haute-fréquence générée est telle que le produit fréquence (exprimée en MHz) par le rayon du fil (exprimé en mm) est compris entre 11 et 17,5, ce qui assure une meilleure détection des défauts.

De préférence, le rapport vitesse de phase $V_\varphi$ sur la vitesse $c_P$ est compris entre 1 et 1,05 :
$$1 \leq \frac{V_\varphi}{c_P} \leq 1{,}05.$$

Et avantageusement entre 1 et 1,025 :
$$1 \leq \frac{V_\varphi}{c_P} \leq 1{,}025$$
.

Système de détection

Un système de détection pour mettre en œuvre le procédé 4 comprend un dispositif d'émission du signal ultra sonore Se, tel qu'un transducteur, notamment de type de type piston et un dispositif de réception, tel qu'un transducteur notamment de type piston, du signal ultra sonore réfléchi Sr dans le fil métallique.

Les dispositifs d'émission et de réception sont distincts ou au contraire confondus.

Avantageusement, le procédé 4 comprend une étape de positionnement 8 des dispositifs d'émission et de réception à une extrémité libre du fil métallique à ausculter.

Comme illustré à la figure 1c, l'extrémité libre E est avantageusement disposée dans la zone d'ancrage ZA de la structure S.

Avantageusement, les dispositifs de réception et d'émission sont disposés perpendiculairement à la direction longitudinale L afin que l'extrémité libre E soit droite, c'est-à-dire qu'un angle entre les dispositifs d'émission et de réception et chacun des fils hélicoïdaux n'excède pas 10°, et de préférence n'excède pas 5°.

Le dispositif d'émission et de réception est avantageusement mis au contact de l'extrémité libre du fil à analyser.

Détermination de fréquences spécifiques

Les équations suivantes sont issues de la théorie de la propagation d'une onde élastique dans un cylindre :

$$k_{r,P}^2 + k_z^2 = \left(\frac{2\pi f}{c_p}\right)^2 \ (1),$$

$$k_{r,S}^2 + k_z^2 = \left(\frac{2\pi f}{c_s}\right)^2 \ (2),$$

où $f$ est la fréquence de l'onde, $c_p$ est la vitesse de l'onde de volume de compression, $c_s$ est la vitesse de l'onde de volume de cisaillement, $k_z$ est le nombre d'onde de l'onde globale se propageant dans la direction longitudinale z=L, $k_{r,P}$ est le nombre d'onde de l'onde de volume de compression dans la direction radiale, $k_{r,S}$ est le nombre d'onde de l'onde de volume de cisaillement dans la direction radiale.

L'équation (1) se réécrit :

$$\left(\frac{2\pi f}{k_z}\right)^2 = \left(1 + \frac{k_{r,P}^2}{k_z^2}\right)c_P^2 = V_\varphi^2 \ (3),$$

où $V_\varphi$ est la vitesse de phase de l'onde globale se propageant longitudinalement.

L'onde globale est obtenue après multiples interactions des ondes de volume de compression et de cisaillement avec les parois du fil suite à l'excitation du fil avec le transducteur d'émission de type piston.

Se plaçant dans des conditions telles que la vitesse de phase de l'onde globale soit légèrement supérieure à la vitesse de l'onde de volume de compression, on procède à l'approximation $V_\varphi{\sim}c_P$, ce qui implique $k_{r,P}{\sim}0$.

L'équation (2) devient alors :

$$k_{r,S}(k_{r,P}{\sim}0) = 2\pi f\sqrt{\left(\frac{1}{c_S^2} - \frac{1}{c_P^2}\right)} \ (4).$$

On peut montrer dans ces conditions et dans le domaine des haute-fréquences que les fréquences sélectionnées satisfont l'équation simplifiée suivante :

$$J_0\big(k_{r,S}(k_{r,P}{\sim}0)a\big) = 0 \ (5),$$

où a est le rayon du fil métallique et $J_0$ est la fonction de Bessel d'ordre 0.

L'équation (5) est déduite de la simplification, sous les conditions précitées, de l'équation générale de Pochhammer Chree (régissant les conditions de propagations des ondes élastiques dans les cylindres).

Les solutions à l'équation (5) après utilisation de l'équation (4) permettent d'écrire les fréquences spécifiques adimensionnelles sous la forme :

$$\frac{2\pi f_0 a}{c_P} = z\acute{e}ros\{J_0(x)\}\sqrt{1 - 2\vartheta} \ (6),$$

où $z\acute{e}ros\{J_0(x)\}$ sont les valeurs qui annulent la fonction de Bessel d'ordre 0 et $\vartheta$ est le coefficient de Poisson.

Pour obtenir l'équation (6), on utilise la relation :

$$\vartheta = (1 - 2\alpha)/(2(1 - \alpha))$$

avec

$$\alpha = \left(\frac{c_S}{c_p}\right)^2.$$

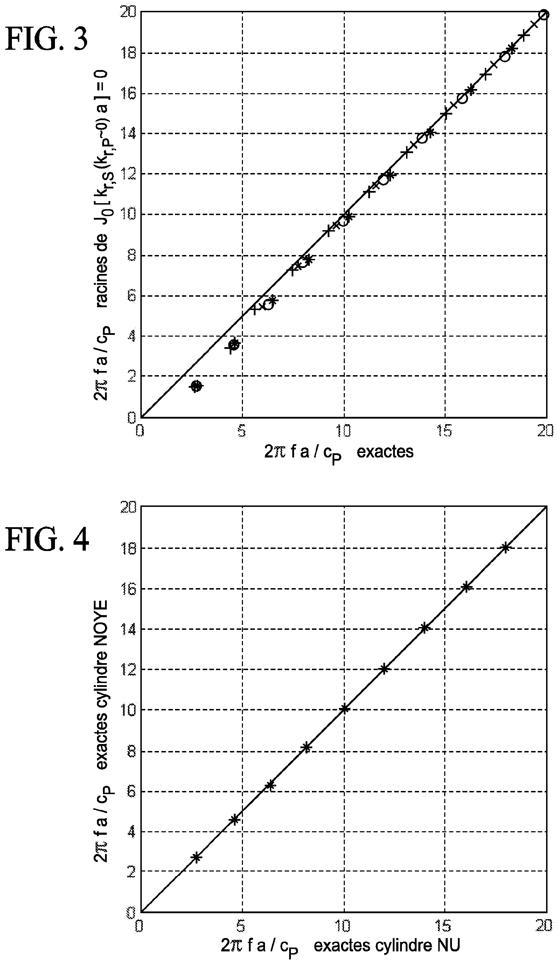

Comme visible sur la figure 3, ces solutions sont une très bonne approximation des solutions exactes pour des fréquences adimensionnelles supérieures à 10.

Comme visible à la figure 4, les solutions exactes sont très peu sensibles à l'environnement autour du fil, puisque la comparaison entre les fréquences adimensionnelles exactes pour un cylindre nu et pour un cylindre noyé dans un coulis de ciment donne un rapport très voisin de 1.

Par fréquence exacte, on entend fréquence obtenue par la théorie de la propagation des ondes élastiques dans les cylindres.

On en déduit que les solutions approchées proposées restent valables quel que soit l'environnement du fil métallique, à condition que les fréquences adimensionnelles soient supérieures à 10, comme expliqué ci-avant.

Ainsi, pour le fil central 2 du toron 1 de la figure 1, l'équation à résoudre est la suivante :

$$J_0\big(k_{r,S}(k_{r,P}\sim 0)a_{FC}\big) = 0 \ (7),$$

où $a_{FC}$ est le rayon du fil central.

D'après les équations (5) et (6), les solutions en fréquence de l'équation (7) sont les fréquences spécifiques et satisfont à l'équation :

$$\frac{2\pi f_{0,FC} a_{FC}}{c_P} = z\acute{e}ros\{J_0(x)\}\sqrt{1 - 2\vartheta} \ (8).$$

De même, pour chaque fil hélicoïdal 3 du toron de la figure 1, l'équation à résoudre est la suivante :

$$J_0\big(k_{r,S}(k_{r,P}\sim 0)a_{FH}\big) = 0 \ (9),$$

où $a_{FH}$ est le rayon du fil hélicoïdal, et dont les solutions en fréquences sont les fréquences spécifiques :

$$\frac{2\pi f_{0,FH} a_{FH}}{c_P} = z\acute{e}ros\{J_0(x)\}\sqrt{1 - 2\vartheta} \ (10).$$

Valeurs numériques

Les produits fréquences spécifiques rayons $f_{0,FC}a_{FC}$ et $f_{0,FH}a_{FH}$, exprimés en MHz.mm, sont avantageusement compris entre 10 et 20, et de préférence entre 11 et 17,5.

Pour un fil en acier, la vitesse de l'onde de volume de compression est $c_P$ = 5860 $m.s^{-1}$, le coefficient de Poisson $\vartheta$ = 0,28, le rayon du fil central $a_{FC}$ = 2,7 $mm$ et le rayon de fil hélicoïdal $a_{FH}$ = 0.96$a_{FC}$.

Les fréquences adimensionnelles obtenues par les équations (8) et (10) donnent des fréquences spécifiques supérieures à 4MHz, et sont plus précisément récapitulées dans le tableau ci-dessous :

| $f_{0,FC}$ (MHz) | | 4,90-4,91 | 5,63 | 6,35-6,36 |
|---|---|---|---|---|
| $f_{0,FH}$ (MHz) | 4,36-4,37 | 5,12-5,13 | 5,88-5,90 | |

Comme il ressort du tableau ci-avant, un écart de l'ordre de 1,5MHz existe entre les fréquences spécifiques extrêmes.

Forme du signal émis Se

L'étape d'émission 5 consiste à générer un signal Se sous forme d'impulsions temporelles dont le contenu fréquentiel est centré autour de l'une des fréquences spécifiques pour concentrer l'énergie dans le fil métallique 2, 3, dont l'état est à analyser.

Avantageusement, le signal Se est une sinusoïde à une fréquence $f_0$ correspondant à la fréquence spécifique et d'une durée telle que la largeur de bande du signal Se à mi-hauteur, notée $\Delta f$ est choisie de sorte qu'elle soit une fraction de l'écart entre 2 fréquences spécifiques consécutives obtenues dans le domaine haute-fréquence, et tel que précisé antérieurement.

L'écart entre deux fréquences spécifiques consécutives peut s'exprimer d'après la formule (11) comme :

$$\big(f_{0,i+1} - f_{0,i}\big) = \frac{c_P}{2\pi a}[z\acute{e}ros\{J_0(x)\}_{i+1} - z\acute{e}ros\{J_0(x)\}_i]\sqrt{1 - 2\vartheta} \ (11),$$

On peut montrer que dans le domaine d'étude haute-fréquence la quantité :

$$[zéros\{J_0(x)\}_{i+1} - zéros\{J_0(x)\}_i] \cong \pi$$

Après remplacement dans l'équation précédente on obtient

$$\left(f_{0,i+1} - f_{0,i}\right) = \frac{c_P}{2a}\sqrt{1 - 2\vartheta} \quad (12),$$

On choisira avantageusement $\Delta f$ comme une fraction de cette quantité et de sorte, que par expérience

$$\Delta f \sim \frac{\left(f_{0,i+1} - f_{0,i}\right)}{15}$$

En d'autres termes, la largeur de bande est choisie de préférence de l'ordre de $\frac{c_P}{30a}\sqrt{1 - 2\vartheta}$ .

On note que le paramètre a est la valeur du plus grand rayon de l'ensemble de fils.

Dans le cas du toron 1, il s'agit du rayon $a_{FC}$ du fil central 2.

On veillera également à utiliser dans l'équation (11) le rayon du fil constitutif le plus grand.

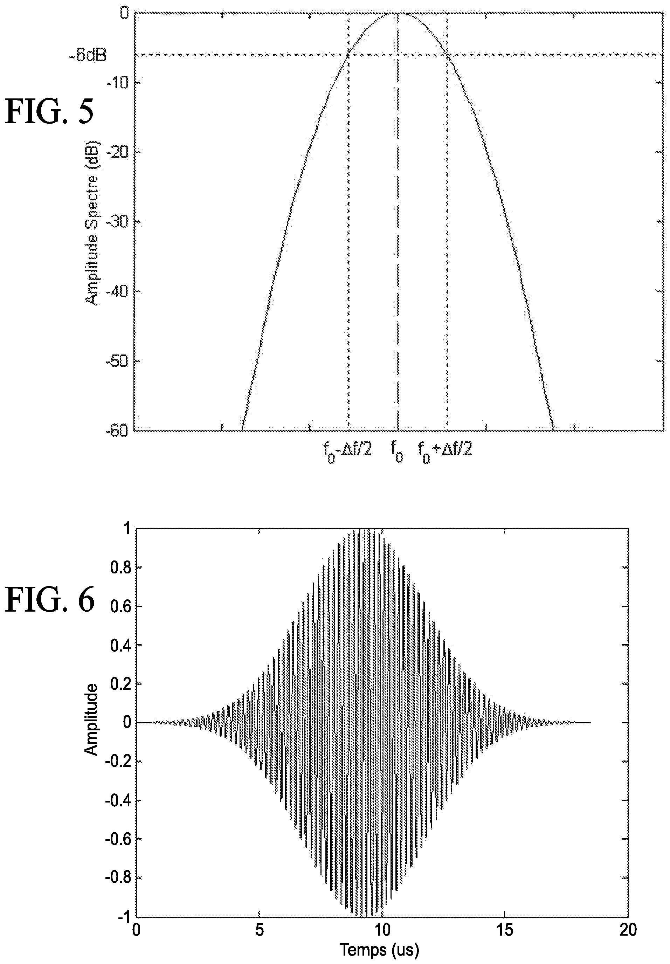

Dans le cas du toron 1, et comme visible sur la figure 5, la largeur de bande est choisie de l'ordre de 50kHz, ($\Delta f = 50\,kHz$), ce qui représente une excitation sinusoïdale comprenant plusieurs périodes autour de l'une des fréquences spécifiques.

Dans ce cas, une distance d'inspection pluri-métrique peut être obtenue.

La figure 6 illustre un exemple d'évolution temporelle du signal Se sous forme d'une sinusoïde de 90 périodes de fréquence centrale 4.9MHz et de bande passante 50 kHz.

On note qu'une augmentation de la largeur de bande entraine une diminution de la portée de détection du système et une augmentation de la résolution temporelle du système qui seront avantageusement utilisées pour la détection de défaut très proche de l'extrémité (distance centimétrique).

Balayage en fréquence

L'étape 5 d'émission du procédé 4 comprend avantageusement une étape de balayage en fréquence autour de la fréquence spécifique déterminée ci-dessus du fait que les propriétés du matériau du fil métallique 2, 3 ne sont pas toujours parfaitement connues, ce qui implique une incertitude sur la valeur du coefficient de Poisson $\vartheta$ et de la vitesse de l'onde de volume de compression $c_P$.

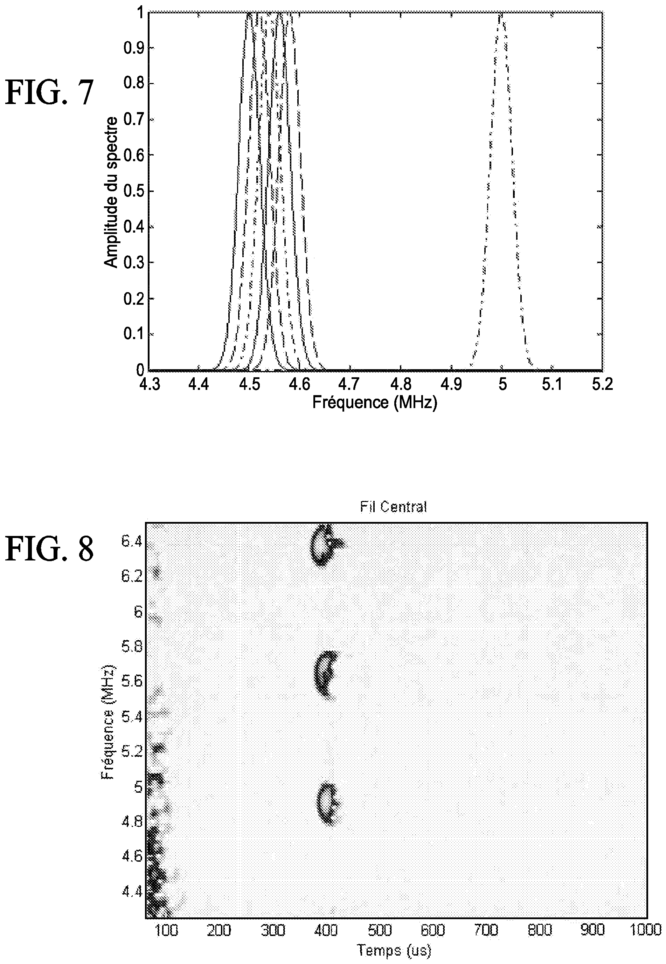

Avantageusement le balayage en fréquence de la fréquence centrale $f_0$ consiste à émettre le signal Se par pas d'une valeur comprise entre $\Delta f/4$ et $\Delta f/2$ ce qui correspond dans le cas du toron 1 à un pas d'une valeur comprise entre $\frac{c_P}{120a}\sqrt{1 - 2\vartheta}$ et $\frac{c_P}{60a}\sqrt{1 - 2\vartheta}$, comme illustré à la figure 7.

Sur la figure 7, le pas est d'une valeur de l'ordre de 20kHz sur une bande de fréquence de 4MHz à 6,5MHz, ou de 4,5MHz à 6,5MHz, de sorte à garantir qu'au moins l'une des fréquences spécifiques du tableau ci-avant soit émise.

Pour des distances plus courtes (submétriques), l'énergie du signal Se a moins besoin d'être concentrée, et les paramètres relatifs à la largeur de bande $\Delta f$ et au pas de balayage sont moins stricts.

Comparaison des fréquences spécifiques mesurées et fréquences spécifiques calculées

L'application du procédé 4 au fil central 2 du toron 1 d'une longueur de 0.95 m noyé dans du coulis de ciment et en traction longitudinale conduit aux résultats indiqués dans le tableau ci-après :

| $f_{0,FC}$ mesurée (MHz) | 4,905 | 5,635 | 6,348 |
|---|---|---|---|
| $f_{0,FC}$ calculée (MHz) | 4,906 | 5,632 | 6,358 |

On constate un très bon accord entre les fréquences spécifiques mesurées et les fréquences spécifiques calculées précédemment.

De même, l'application du procédé 4 à un fil périphérique 3 du toron 1 d'une longueur de 0,95 m noyé dans du coulis de ciment et en traction longitudinale conduit aux résultats indiqués dans le tableau ci-après :

| $f_{0,FH}$ mesurée (MHz) | 4,36-4,37 | 5,12-5,13 | 5,88-5,90 | |
|---|---|---|---|---|
| $f_{0,FH}$ calculée (MHz) | 4,367 | 5,126 | 5,885 | |

On constate encore un très bon accord entre les fréquences spécifiques mesurées et les fréquences spécifiques calculées précédemment.

Détection d'un défaut

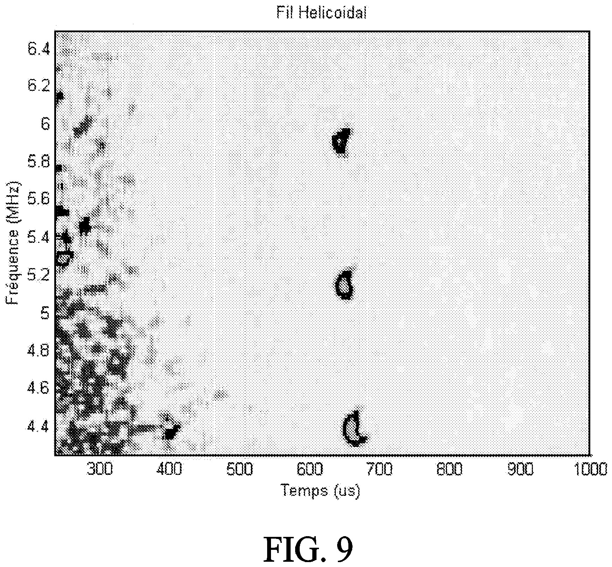

Les figures 8 et 9 sont des images obtenues par application du procédé 4.

Dans le cas de la figure 8, il s'agit du fil central 2 du toron 1 d'une longueur de 0,95m. Le toron en traction longitudinale est noyé dans du coulis de ciment et ne présente pas de défaut.

La figure 8 montre la capacité des fréquences spécifiques à bien se propager dans le fil central du toron tendu et noyé.

La figure 9 est une image obtenue par application du procédé 4 à un fil périphérique 3 du toron 1 d'une longueur de 4m. Le toron en traction longitudinale est noyé dans du coulis de ciment et présente un défaut sur le fil périphérique hélicoïdal à 1,6 m de l'extrémité du fil périphérique hélicoïdal excité.

Un balayage en fréquence est réalisé entre 4MHz et 6,5MHz, comme expliqué précédemment.

Pour chaque fréquence, on effectue un enregistrement temporel de l'amplitude du signal réfléchi Sr.

L'image obtenue est caractéristique de la réponse temporelle obtenue en réflexion à différentes fréquences centrales d'excitation pour un toron de 7 fils noyé dans du coulis de ciment et présentant un défaut.

Comme visible sur les figures 8 et 9, les fréquences pour lesquelles le signal Sr est détecté sont des fréquences sensiblement égales aux fréquences spécifiques indiquées précédemment

Le temps auquel le signal réfléchi Sr est détecté dépend de la distance entre l'extrémité du fil et la position du défaut dans le fil 2 ou le fil 3 et de la vitesse de propagation d'énergie de l'onde globale dans le même fil.

L'équation (13) suivante est une estimation de la vitesse de propagation de l'énergie de l'onde globale pour chaque fréquence spécifique :

$$V_e = c_p \left[1 - exp(-1{,}53\vartheta(2\pi a f_0/c_P)^{0{,}6})\right]/\sqrt{1 + \tan^2(\theta)} \ (13).$$

Le paramètre $\theta$ est l'angle d'hélice du fil métallique.

Le fil central 2 du toron 1 étant droit, l'angle $\theta$ vaut 0°, tandis que pour les fils périphériques 3 du toron 1, l'angle $\theta$ est non nul.

Ainsi, l'équation (13) se réécrit pour le fil central 2 :

$$V_{e,FC} = c_p \left[1 - exp\left(-1{,}53\vartheta\left(2\pi a_{FC} f_{0,FC}/c_P\right)^{0{,}6}\right)\right] \ (14).$$

Et, l'équation (11) se réécrit pour chaque fil hélicoïdal 3 :

$$V_{e,FH} = c_p \left[1 - exp\left(-1{,}53\vartheta\left(2\pi a_{FH} f_{0,FH}/c_P\right)^{0{,}6}\right)\right]/\sqrt{1 + \tan^2(\theta_{FH})} \ (15).$$

La localisation $d_{fil}$ du défaut se fait au moyen de l'équation suivante (14) :

$$d_{fil} = V_{e,fil}\Delta t/2 \ (14).$$

La quantité $\Delta t$ est le temps de propagation de l'énergie de l'onde globale dans le fil pour effectuer l'aller-retour entre l'extrémité du fil et le défaut. Elle correspond à la mesure de la durée entre le maximum du signal d'émission Se et le maximum du signal réfléchi Sr.

Selon le procédé illustré aux figures 8 et 9, le dispositif d'émission et le dispositif de réception sont disposés à l'extrémité libre du fil métallique.

Sur la figure 8, un écho, c'est-à-dire le signal Sr, est détecté à 400$\mu$s, ce qui est correspond sensiblement à une distance égale à deux fois la longueur du fil métallique 3.

On en déduit que le signal émis Se n'a pas rencontré de défaut au cours de sa propagation dans le fil 2 et que seule l'autre extrémité du fil a réfléchi le signal Se.

Sur la figure 9, un écho, c'est-à-dire le signal Sr, est détecté vers 650$\mu$s, ce qui est correspond sensiblement à une distance égale à deux fois 1,60m.

On en déduit que le signal émis Se a rencontré un défaut au cours de sa propagation dans le fil 2 à une distance de 1.60m de l'extrémité libre du fil 3. Ce défaut est par exemple une rupture de fil, ou une entaille, ou une perte de matière par corrosion par exemple.

Le procédé selon la présente invention permet de concentrer l'énergie du signal ultrasonore dans le fil dont l'état est à analyser.

Le calcul des fréquences spécifiques assure que le procédé est effectué dans la bande de fréquences appropriée.

Comme déjà mentionné, l'invention permet une auscultation d'un toron fil à fil par les caractéristiques des ondes haute fréquence et vitesse de phase légèrement supérieure à la vitesse de l'onde de volume compression $c_P$ se propageant dans la direction longitudinale émises par le transducteur de type piston, ce qui assure de concentrer l'énergie et ainsi inspecter de longues distances dans chacun des fils du toron.

Les hautes-fréquences permettent également de découpler la propagation dans les fils et de rendre chaque fil indépendant l'un de l'autre (tout en faisant partie d'un toron qui en plus est noyé).

Le procédé de détection selon la présente invention permet une auscultation fil à fil, c'est-à-dire une auscultation individuelle de chacun des fils du toron. Il suffit pour ce faire d'appliquer le procédé de détection à l'un des fils, en disposant le système de détection à l'extrémité libre E, comme déjà indiqué, puis de répéter le procédé à chaque fil du toron.

L'auscultation du câble fil à fil permet également d'améliorer le diagnostic de l'état du câble.

En particulier, l'invention est tout à fait indiquée pour la détection de défaut dans un fil métallique, par exemple en acier, d'une zone d'ancrage d'un câble, dont la configuration spécifique a déjà été expliquée.

## Revendications

1. Procédé de détection de défaut d'au moins un fil métallique d'un ensemble de fils métallique, en particulier dans un câble, le procédé comprenant une :

   - étape d'émission (5) d'un signal ultra sonore haute-fréquence (Se) centré autour d'une fréquence ($f_0$) dite spécifique dans le fil métallique;
   - étape de réflexion (6) dudit signal ultra sonore dans le fil métallique ; et
   - étape de réception (7) du signal ultra sonore réfléchi ;
   le signal ultra sonore émis (Se) permettant une excitation d'au moins une onde haute-fréquence apte à se propager dans une direction longitudinale (z=L) du fil métallique (2, 3) et présentant une vitesse de phase ($V_{\varphi}$) légèrement supérieure à une vitesse ($c_p$) d'une onde de volume de compression dans le métal à partir duquel est composé le fil métallique (2, 3),
   le fil métallique ayant un rayon,
   dans lequel le produit fréquence spécifique rayon, exprimé en MHz.mm, est compris entre 10 et 20, et de préférence entre 11 et 17.5,
   dans lequel un rapport vitesse de phase $V_{\varphi}$ sur la vitesse $c_P$ est compris entre 1 et 1,05, avantageusement entre 1 et 1,025.

2. Procédé de détection selon la revendication 1, dans lequel la fréquence spécifique adimensionnelle est définie par l'équation :

$$\frac{2\pi f_0 a}{c_P} = z\acute{e}ros\{J_0(x)\}\sqrt{1-2\vartheta}\,,$$

où $a$ est le rayon du fil métallique, $J_0$ est la fonction de Bessel d'ordre 0, $z\acute{e}ros\{J_0(x)\}$ sont les valeurs qui annulent la fonction de Bessel d'ordre 0 et $\vartheta$ est le coefficient de Poisson et $c_p$ est la vitesse de l'onde de volume de compression.

3. Procédé de détection selon l'une des revendications 1 ou 2, dans lequel une largeur de bande $\Delta f$ du signal ultrasonore émis (Se) est d'un ordre de grandeur $\frac{c_P}{30a}\sqrt{1-2\vartheta}$ , où le paramètre a est une valeur d'un plus grand rayon de l'ensemble de fils.

4. Procédé de détection selon l'une des revendications précédentes, dans lequel l'étape d'émission comprend une étape de balayage (9) en fréquence autour de la fréquence spécifique ($f_0$).

5. Procédé de détection selon la revendication 4, dans lequel l'étape de balayage (9) est réalisée par pas compris entre $\frac{c_P}{120a}\sqrt{1-2\vartheta}$ et $\frac{c_P}{60a}\sqrt{1-2\vartheta}$ , où le paramètre a est une valeur d'un plus grand rayon de l'ensemble de fils, $\vartheta$ est le coefficient de Poisson et $c_p$ est la vitesse de l'onde de volume de compression.

6. Procédé de détection selon l'une des revendications précédentes, dans lequel le signal ultra sonore émis (Se) est une excitation sinusoïdale d'une durée de plusieurs périodes et de préférence modulée en amplitude.

7. Procédé de détection selon l'une des revendications précédentes, comprenant une étape (8) de positionnement d'un système d'émission et de réception du signal ultra sonore à une même extrémité du fil métallique (2, 3).

8. Procédé de détection selon l'une des revendications 1 ou 2, dans lequel l'extrémité du fil métallique (2, 3) est disposée perpendiculairement à une direction longitudinale L des fils afin qu'un angle entre les dispositifs d'émission et de réception et chacun des fils hélicoïdaux n'excède pas 5°.

9. Procédé de détection selon l'une des revendications précédentes, comprenant une étape de mesure d'une durée ($\Delta t$) entre l'émission du signal ultra sonore (Se) et la détection du signal ultra sonore réfléchi (Sr).

10. Procédé de détection selon la revendication précédente, comprenant une étape de comparaison de ladite durée ($\Delta t$) à une valeur attendue d'un temps de parcours du signal ultra sonore réfléchi dans le fil métallique.

11. Procédé de détection selon l'une des revendications 9 ou 10, comprenant une étape de localisation du défaut par une estimation de la vitesse de propagation de l'énergie de l'onde globale dans le fil métallique.

12. Procédé de détection selon la revendication 11, dans lequel la vitesse de propagation d'énergie de l'onde globale dans le fil métallique est estimée au moyen de l'équation :

$$V_e = c_p\left[1 - exp(-1,53\vartheta(2\pi af_0/c_P)^{0,6})\right]/\sqrt{1+\tan^2(\theta)},$$

où $\theta$ est un angle d'hélice du fil métallique, a est un rayon du fil métallique, $J_0$ est la fonction de Bessel d'ordre 0, zéros$\{J_0(x)\}$ sont les valeurs qui annulent la fonction de Bessel d'ordre 0 et $\vartheta$ est le coefficient de Poisson et $c_p$ est la vitesse de l'onde de volume de compression.

**Patentansprüche**

1. Verfahren zum Detektieren eines Defekts in mindestens einem Metalldraht einer Metalldrahtanordnung, insbesondere in einem Kabel, wobei das Verfahren beinhaltet:

- einen Schritt des Aussendens (5) eines hochfrequenten Ultraschallsignals (Se), das um eine sogenannte spezifische Frequenz (f0) im Metalldraht zentriert ist;
- einen Schritt des Reflektierens (6) des genannten Ultraschallsignals in dem Metalldraht; und
- einen Schritt des Empfangens (7) des reflektierten Ultraschallsignals;
wobei das ausgesendete Ultraschallsignal (Se) eine Anregung von mindestens einer Hochfrequenzwelle ermöglicht, die sich in einer Längsrichtung (z=L) des Metalldrahtes (2, 3) ausbreiten kann und eine Phasenge-

schwindigkeit ($V_\varphi$) aufweist, die etwas höher als eine Geschwindigkeit ($c_p$) einer Kompressionsvolumenwelle in dem Metall ist, aus dem der Metalldraht (2, 3) besteht,

wobei der Metalldraht einen Radius hat,

wobei das Produkt aus spezifischer Frequenz und Radius, ausgedrückt in MHz.mm, zwischen 10 und 20, und vorzugsweise zwischen 11 und 17,5 liegt,

wobei ein Verhältnis der Phasengeschwindigkeit $V_\varphi$ zur Geschwindigkeit $c_P$ zwischen 1 und 1,05, vorzugsweise zwischen 1 und 1,025 liegt.

2. Verfahren nach Anspruch 1, wobei die dimensionslose spezifische Frequenz durch die Gleichung definiert ist:

$$\frac{2\pi f_0 a}{c_P} = z\acute{e}ros\{J_0(x)\}\sqrt{1 - 2\vartheta}\,,$$

wobei a der Metalldrahtradius ist, $J_0$ die Bessel-Funktion der Ordnung 0 ist, $z\acute{e}ros\{J_0(x)\}$ die Werte sind, die die Besselfunktion der Ordnung 0 aufheben und $\vartheta$ die Poissonzahl und $c_p$ die Geschwindigkeit der Kompressionsvolumenwelle ist.

3. Verfahren nach einem der Ansprüche 1 oder 2, wobei eine Bandbreite $\Delta f$ des übertragenen Ultraschallsignals (Se) in einer Größenordnung von $\frac{c_P}{30a}\sqrt{1 - 2\vartheta}$ ist, wobei der Parameter a ein Wert eines größten Radius der Drahtanordnung ist.

4. Verfahren nach einem der vorhergehenden Ansprüche, wobei der Schritt des Aussendens einen Schritt des Abtastens (9) der Frequenz um die spezifische Frequenz (f0) herum beinhaltet.

5. Verfahren nach Anspruch 4, wobei der Schritt des Abtastens (9) in Schritten zwischen $\frac{c_P}{120a}\sqrt{1 - 2\vartheta}$ und $\frac{c_P}{60a}\sqrt{1 - 2\vartheta}$ realisiert wird, wobei der Parameter a ein Wert eines größten Radius der Drahtanordnung ist, $\vartheta$ die Poissonzahl und $c_p$ ist die Geschwindigkeit der Kompressionsvolumenwelle ist.

6. Verfahren nach einem der vorhergehenden Ansprüche, wobei das ausgesendete Ultraschallsignal (Se) eine sinusförmige Anregung mit einer Dauer von mehreren Perioden und vorzugsweise amplitudenmoduliert ist.

7. Verfahren nach einem der vorhergehenden Ansprüche, wobei das Verfahren einen Schritt (8) des Positionierens eines Systems zum Senden und Empfangen des Ultraschallsignals an einem selben Ende des Metalldrahtes (2, 3) beinhaltet.

8. Verfahren nach einem der Ansprüche 1 oder 2, wobei das Ende des Metalldrahtes (2, 3) senkrecht zu einer Längsrichtung L der Drähte angeordnet ist, so dass ein Winkel zwischen dem Sende- und Empfangsgerät und jedem der schraubenförmigen Drähte 5° nicht überschreitet.

9. Verfahren nach einem der vorhergehenden Ansprüche, wobei das Verfahren einen Schritt der Messung einer Dauer ($\Delta t$) zwischen dem Aussenden des Ultraschallsignals (Se) und der Detektion des reflektierten Ultraschallsignals (Sr) beinhaltet.

10. Verfahren nach dem vorhergehenden Anspruch, wobei das Verfahren einen Schritt des Vergleichs der genannten Dauer ($\Delta t$) mit einem erwarteten Wert einer Laufzeit des reflektierten Ultraschallsignals im Metalldraht beinhaltet.

11. Verfahren nach einem der Ansprüche 9 oder 10, wobei das Verfahren einen Schritt zum Lokalisieren des Defekts durch Abschätzen der Ausbreitungsgeschwindigkeit der Gesamtwellenenergie im Metalldraht beinhaltet.

12. Verfahren nach Anspruch 11, wobei die Energieausbreitungsgeschwindigkeit der Gesamtwelle im Metalldraht unter Verwendung der Gleichung geschätzt wird:

$$V_e = c_p \left[1 - exp(-1{,}53\vartheta(2\pi a f_0/c_P)^{0{,}6})\right]/\sqrt{1 + \tan^2(\theta)},$$

wobei $\theta$ ein Helixwinkel des Metalldrahtes ist, $a$ ein Radius des Metalldrahtes ist, $J_0$ die Bessel-Funktion der Ordnung 0 ist, *zéros*$\{J_0(x)\}$ die Werte sind, die die Besselfunktion der Ordnung 0 aufheben und $\vartheta$ die Poissonzahl und $c_p$ ist die Geschwindigkeit der Kompressionsvolumenwelle ist.

**Claims**

1. A method for detecting a defect in at least one metal wire of a set of metal wires, in particular in a cable, the method comprising a:

   - step of emitting (5) a high-frequency ultrasound signal (Se) centred around a so-called specific frequency (f0) in the metal wire;
   - step of reflecting (6) said ultrasound signal into the metal wire; and
   - step of receiving (7) the reflected ultrasound signal;

   the emitted ultrasound signal (Se) allowing an excitation of at least one high-frequency wave able to propagate in a longitudinal direction (z=L) of the metal wire (2, 3) and having a phase velocity ($V_\varphi$) slightly higher than a velocity ($c_p$) of a compression volume wave in the metal from which the metal wire (2, 3) is made,
   the metal wire having a radius,
   wherein the specific frequency-radius product, expressed in MHz.mm, is between 10 and 20, and preferably between 11 and 17.5,
   in which a phase velocity ratio $V_\varphi$ to the speed $c_P$ is between 1 and 1.05, preferably between 1 and 1.025.

2. The detection method of claim 1, wherein the dimensionless specific frequency is defined by the equation:

$$\frac{2\pi f_0 a}{c_P} = zeros\{J_0(x)\}\sqrt{1 - 2\vartheta},$$

   where $a$ is the radius of the metal wire, $J_0$ is the zero-order Bessel function, *zeros*$\{J_0(x)\}$ are the values that cancel the zero-order Bessel function and $\vartheta$ is the Poisson's ratio and $c_p$ is the compression volume wave velocity.

3. A detection method according to any of claims 1 or 2, wherein a bandwidth $\Delta f$ of the emitted ultrasound signal (Se) is of an order of magnitude $\dfrac{c_P}{30a}\sqrt{1 - 2\vartheta}$ where the parameter a is a value of a largest radius of the set of wires.

4. A detection method according to any of the preceding claims, wherein the emission step comprises a frequency sweeping step (9) around the specific frequency (f0).

5. The detection method according to claim 4, wherein the sweeping step (9) is performed in steps between $\dfrac{c_P}{120a}\sqrt{1 - 2\vartheta}$ and $\dfrac{c_P}{60a}\sqrt{1 - 2\vartheta}$ wherein the parameter a is a value of a larger radius of the set of wires, $\vartheta$ is the Poisson's ratio and $c_p$ is the compression volume wave velocity.

6. A detection method according to any of the preceding claims, wherein the emitted ultrasound signal (Se) is a sinusoidal excitation having a duration of several periods and preferably amplitude-modulated.

7. A detection method according to any of the preceding claims, comprising a step (8) of positioning a system for emission and receipt of the ultrasound signal at a same end of the metal wire (2, 3).

8. The detection method according to any of claims 1 or 2, wherein the end of the metal wire (2, 3) is arranged perpendicular to a longitudinal direction L of the wires so that an angle between the emitting and receiving devices and each of the helical wires is not more than 5°.

9. A detection method according to any of the preceding claims, comprising a step of measuring a time ($\Delta t$) between the emission of the ultrasound signal (Se) and the detection of the reflected ultrasound signal (Sr).

10. A detection method according to the preceding claim, comprising a step of comparing said time ($\Delta t$) to an expected value of a travel time of the reflected ultrasound signal in the metal wire.

11. A detection method according to any of claims 9 or 10, comprising a step of locating the defect by estimating the propagation velocity of the energy of the full wave in the metal wire.

12. The detection method according to claim 11, wherein the energy propagation velocity of the full wave in the metal wire is estimated using the equation:

$$V_e = c_p \left[1 - exp(-1{,}53\vartheta(2\pi a f_0/c_P)^{0{,}6})\right]/\sqrt{1 + \tan^2(\theta)},$$

where $\theta$ is a helix angle of the metal wire, $a$ is a radius of the metal wire, $J_0$ is the zero-order Bessel function, $zeros\{J_0(x)\}$ are the values that cancel the zero-order Bessel function and $\vartheta$ is the Poisson's ratio and $c_p$ is the compression volume wave velocity.

**FIG. 1a**

**FIG. 1b**

FIG. 1c

FIG. 2

FIG. 3

FIG. 4

FIG. 5

FIG. 6

FIG. 7

FIG. 8

20

Fil Helicoidal

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7575371 B1

- US 2003037615 A1

**Littérature non-brevet citée dans la description**

- **F. YANG ; Y. PAN ; W. CHEN.** Defect detection by ultrasonic guided wave for a steel wire in the anchorage zones. *Proceedings of the 2014 Symposium on Piezoelectricity, Acoustic Waves, and Device Applications,* 2014, 206-209

- Propagation characteristics of high order longitudinal modes in steel strands and their applications. **LIU Z. et al.** Acta Mechanica Solida Sinica. Elsevier, vol. 21, 573-579